# EUROPÄISCHE PATENTSCHRIFT

(11) **EP 0 391 042 B1**
(45) Veröffentlichungstag und Bekanntmachung des Hinweises auf die Patenterteilung: **18.08.1993**
(21) Anmeldenummer: 90102757.3
(22) Anmeldetag: 13.02.1990
(51) Int. Cl.: B03D 1/14, D21F 1/70

(54) **Verfahren zur Regelung einer Flotationsanlage**
Method of controlling a flotation plant
Méthode pour le réglage d'une installation de flottation

(30) Priorität: 07.04.1989 DE 3911233
(43) Veröffentlichungstag der Anmeldung: 10.10.1990
(73) Patentinhaber: J.M. Voith GmbH, D-89522 Heidenheim (DE)
(72) Erfinder: Ortner, Herbert, Dr., D-7920 Heidenheim (DE); Pfalzer, Lothar, Dr., D-7920 Heidenheim (DE)
(74) Vertreter: Weitzel, Wolfgang, Dr.-Ing.

(56) Entgegenhaltungen:
- AU-B- 548 578
- DE-B- 1 262 758
- US-A- 3 474 902
- AUFBEREITUNGS-TECHNIK, Band 29, Nr. 3, März 1988, WIESBADEN(DE),Seiten 158-160; "Direkte und kontinuierliche Bestimmung des Feststoffgehaltes und des Feststoff-Aschegehaltes von Flotationstrüben bei der Steinkohlenaufbereitung"
- DAS PAPIER, Band 42, Nr. 7, Juli 1988, DARMSTADT(DE), Seiten 337-341, P. Schweiss: "Die Voith-Mehrfach-Injektorzelle"

## Beschreibung

Bei Flotationsanlagen für zu reinigende Suspensionen tritt die auszuscheidende Fraktion als Schaum auf, der bei vielen Anlagen in einer Schaumrinne abgeführt wird. Kommt es zu einem Übermaß bei der Erzeugung des Schaumes, kann es zu Betriebsstörungen wegen der Schwierigkeiten bei der Abfuhr der niedergeschlagenen bzw. niederzuschlagenden Schaummenge oder durch Übertreten des zuviels an Schaummenge über die Schaumrinne kommen.

Aus einer Anordnung für die Erzflotation, nämlich die AU-B-548578 ist es bekannt, die Schaumhöhe zu messen, und zwar auch hinsichtlich eines Höhenbereiches für eine bestimmte Schaumqualität, um eine entsprechende Chemikalie zur Schaumerzeugung in ihrer zugegebenen Quantität zu steuern. Bei Erzflotationsmaschinen ist es ja so, daß eine sehr große, erzeugte Schaummenge erwünscht ist, um das Erz mit dem Schaum abzuführen und von der Gangart zu trennen. In einer anderen, ähnlichen Einrichtung für Erzflotation, nämlich der US-A-3474902 wird ebenfalls in einer Reihe von hintereinander geschalteten Flotationszellen die Schaumhöhe mittels einer in der Höhe verfahrbaren Sonde ermittelt, um auch die Chemikalien, die die Schaumentstehung erzeugen, in ihrer zugegebenen Quantität zu regeln. Auch hier ist es das Ziel, in allen Flotationszellen eine genügende Schaumhöhe zu erzielen.

Anders ist es bei Flotation von zu reinigenden Suspensionen, wo mit dem Schaum die zu verwerfenden Verschmutzungen abgeführt werden sollen. Gemäß DE-B-1262758 wird zwar die Schaumhöhe in einer Schaumrinne gemessen, jedoch dient dies nur dem Zweck, ein Ventil in der Druckleitung der Förderpumpe zu steuern und damit die Schaumabfuhr zu regeln. Es darf aber stark bezweifelt werden, daß dies eine ausreichende Möglichkeit ist, die Abfuhr des Schaumes bei allen Betriebszuständen zu beherrschen. Für eine Steuerung der erzeugten Schaummenge des Aufbereitungsprozesses, nämlich hier der Abscheidung von in Wasser suspendierten Zellulosefasern, finden sich in dieser Schrift keinerlei Hinweise, erst recht nicht für die Problematik der Schaumentstehung bei der Aufbereitung von Altpapier mittels Flotation.

Aufgabe der Erfindung ist es, ein Verfahren zur Regelung einer Flotationsanlage anzugeben, um die eingangs genannten Schwierigkeiten zu beherrschen.

Diese Aufgabe wird erfindungsgemäß durch die Merkmale des kennzeichnenden Teils des Patentanspruchs 1 gelöst.

Als vorzugsweise zu regelnde Prozeßparameter kommen die rückgeführte Sekundär-Flotationsstoffmenge, die einzugebenden Chemikalien, die die Schaumerzeugung beeinflussen können, sowie die Regelung von Stoffmengen, die die Schaumerzeugung begünstigende Chemikalien enthalten, in Frage.

Selbstverständlich kann natürlich auch auf die Zufuhr der Stoffmenge einerseits und die Zufuhr der Luftmenge unmittelbar für die Flotation eingewirkt werden.

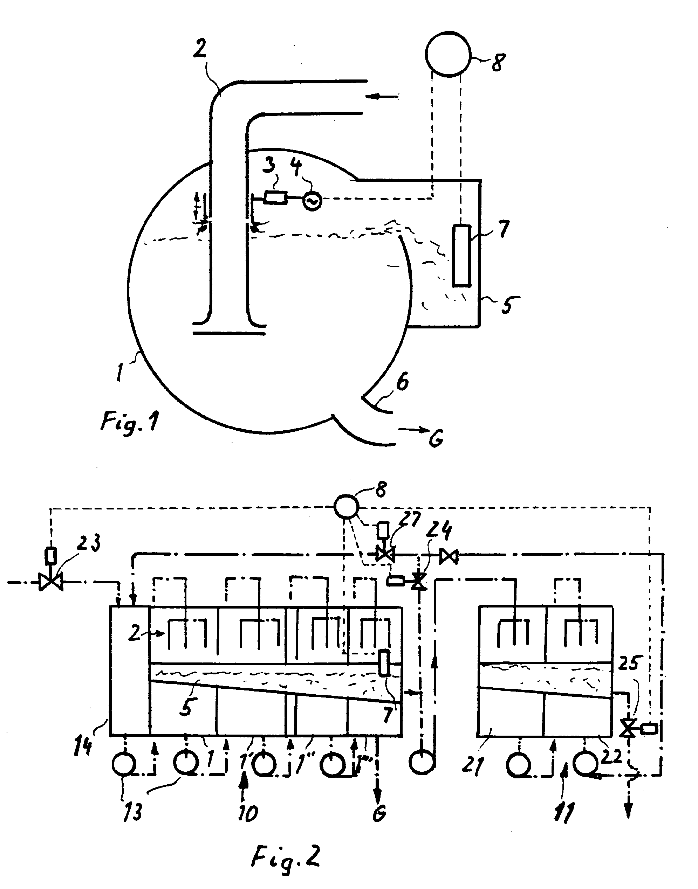

In Fig. 1 ist eine Flotationszelle im Querschnitt dargestellt, bei welcher in einem langgestreckten, zylindrischen Behälter einzelne Zellen durch Querwände abgeschottet sind. Die Zellen erhalten den zu flotierenden Stoff (Suspension, z.B. Papierfasersuspension) durch das Zufuhrrohr 2, dem die Luft mittels Zumeßkanal 3 über Stellventil 4 zugeleitet wird. Es handelt sich dabei um einen Injektor, der entweder durch Ansaugung und/oder Verwirbelung die Erzeugung feiner Luftbläschen und Vermischung derselben mit der Suspension bewirkt. Die Abfuhr der gereinigten Suspension erfolgt durch Leitung 6 und die Schaumrinne, in der sich der erzeugte Schaum sammelt, ist mit 5 bezeichnet. Diese Schaumrinne erstreckt sich längs des langgestreckten Zylinders über mehrere Flotationszellen, die im allgemeinen hintereinandergeschaltet sind, hinweg. Es ist eine Meßsonde 7 angedeutet, die die erzeugte Schaummenge über den relativen Luftanteil des erzeugten Schaumes bzw. daraus zu bildenden Schalmmes mißt. Das Signal dieser Sonde geht auf ein Steuergerät oder eine Regelapparatur 8, die über Ventil 4 die Luftmenge steuert. Jedoch ist eine solche Steuerung nicht unbedingt wünschenswert, da für die Luftmenge gewisse Werte im Verhältnis zu der zugeführten Suspensionsmenge für einen guten Flotationseffekt einzuhalten sind.

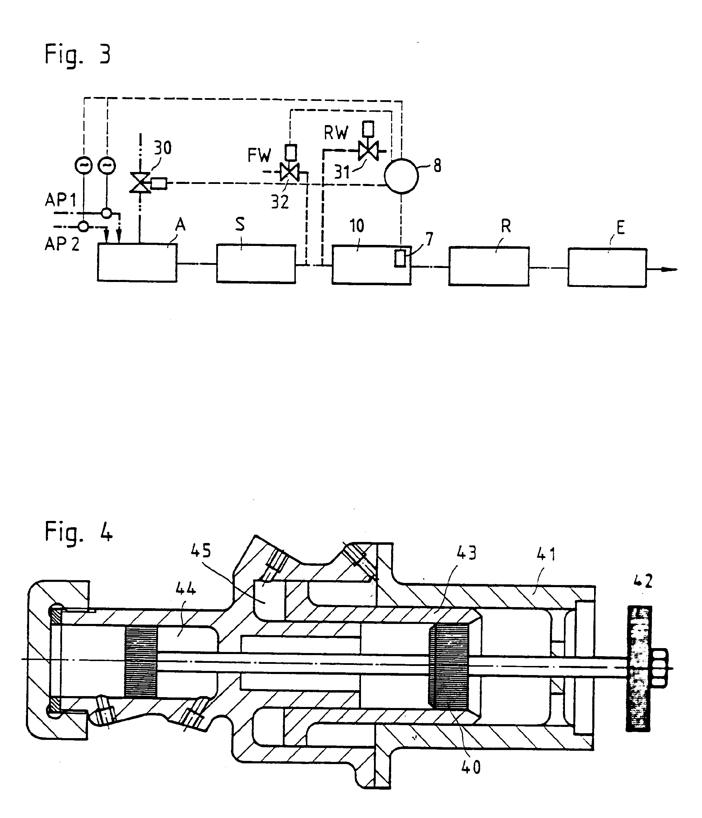

In Figur 2 ist die Regelung der Flotationsanlage weiter erläutert. Dort ist dargestellt, daß die verschiedenen Zellen 1, 1', 1'' usw. über Pumpen 13 jeweils die Suspensionsmenge erhalten. Vorgeschaltet ist eine Mischzelle 14, der über Ventil 23 die Suspensionsmenge gesteuert zugeleitet wird. Die Flotationszellen 1, 1' usw. bilden die Primär-Flotation 10. Der Gutstoff wird entsprechend Pfeil G abgeführt. Die Sekundär-Flotationsanlage ist mit 11 bezeichnet und besteht aus den beiden Sekundär-Zellen 21 und 22, die ähnlich wie die Primär-Zellen 1 usw. aufgebaut sind. Im Falle der Sekundär-Flotation kann man eine erhöhte Schaummenge selbstverständlich durch erhöhten Schaumaustrag bei erhöhter Spritzwassermenge zur Niederschlagung des Schaumes über Ventil 25 steuern.

Bei der Primär-Flotation 10 kann man über Ventil 27 die in die Primär-Flotation rückgeführte gereinigte Suspensionsmenge der Sekundär-Flotation, über Ventil 23 die in die Primär-Flotation eingeführte Stoffmenge bei erhöhtem Schaumanfall herabsetzen.

Die erstere Maßnahme ist sehr vorteilhaft, weil sie nur einen relativ schwachen Eingriff in das Gesamtsystem mit sich bringt.

Gemäß Figur 3 wird auf die Parameter des Deinking-Prozesses mit Reinigungs- bzw. Sortierstufen R und S und einer Eindickung E insgesamt eingewirkt.

Dies kann einmal geschehen hinsichtlich der zugeführten Chemikalien beim Auflösevorgang, z.B. im Stofflöser A über Ventil 3, ferner durch Beschränkung der aus dem Fabrikationsprozeß abgeführten Rückwasser (Flotationswasser) RW über Ventil 31 und dementsprechend über Ventil 32, z.B. eine Frischwassermenge anteilmäßig statt dessen zuzugeben.

Eine sehr vorteilhafte Lösung ist die folgende:
Man verwendet zwei verschiedene Papierfaserstoffströme AP₁ und AP₂; dann kann man z.B. durch Steuerung der Geschwindigkeit oder Gesamtbetriebszeit der Förderbänder, die diese verschiedenen Altpapierqualitäten dem Stofflöser zufördern, bei zu großer Schaummenge die Menge, z.B. von stark gestrichenem Papier, herabsetzen, das überwiegend solche Chemikalien enthält, die die Schaumentstehung oder die Schaumstabilisierung begünstigen. Dies ist ebenfalls vom Regler 8 ausgehend durch die gestrichelte Linie angedeutet.

Die Erfindung ist natürlich auch anwendbar bei Flotationszellen ohne Schaumrinne, da man mit einer den relativen Luftgehalt messenden Meßsonde auch den bei anderen Flotationszellen niedergeschlagenen Schaum (Schlamm) auf den Luftgehalt untersuchen kann, um von daher auf die erzeugte Schaummenge zu schließen. Man kann dadurch auch feststellen, inwieweit sich Eingangsparameter, z.B. hinsichtlich Belastung mit Chemikalien, z.B. auch abhängig von der Altpapiersorte, geändert haben.

Es ist erfindungsgemäß weiter erkannt worden, daß man mit einer nach dem Kompressionsprinzip arbeitenden, den relativen Luftgehalt messenden Meßsonde zumindest ein relatives Maß für die erzeugte Schaummenge hat, da man nach Erfahrungswerten aus dem relativen Luftgehalt z.B. des aus dem Flotationsschaum niedergeschlagenen Schlammes auf die gesamte erzeugte Schaummenge schließen kann. Da eine solche Sonde sehr genau mißt, kann man rechtzeitig die genannten Regelungsmaßnahmen einleiten.

Dabei saugt ein Hauptkolben 40 (siehe Fig. 4) eine Schlammprobe in einen Zylinder 41, in dem der Schlamm dann nach Verschließen desselben mittels mit dem Hauptkolben 40 verbundener Kappe 42 durch einen weiteren, kleineren Kolben 43 komprimiert wird. Der Weg des kleineren Kolbens ist dann ein Maß für den relativen Luftgehalt des Schlamms. Dabei werden die Kolben durch Pneumatik-Zylinder 44 bzw. 45 betätigt.

Eine bekannte, nach dem Kompressionsprinzip einer entnommenen Schlammprobe arbeitende, den relativen Luftgehalt messende Sonde ist ein Fabrikat der Firma Papec, 18310 Sumner, Washington 98390, oder Clark & Vicario.

## Patentansprüche

1. Verfahren zur Regelung einer Flotationszelle oder Flotationsanlage für zu reinigende Suspensionen hinsichtlich Schaumerzeugung, dadurch gekennzeichnet, daß abhängig von der Erfassung eines die erzeugte Schaummenge mitbestimmenden, relativen Luftgehalts des Schaumes oder des niedergeschlagenen Schaumes (Schlamm) durch eine entsprechende Sonde eine Steuerung oder Regelung der die Schaummenge im wesentlichen bestimmenden, sonstigen Stoff- oder Prozeßparameter vor oder nach der Flotationsanlage, gegebenenfalls Primär-Flotationsanlage (Flotationsmaschine aus Primär-Flotationszellen), vorgenommen wird.

2. Verfahren nach Anspruch 1, dadurch gekennzeichnet, daß eine Steuerung der zur Primär-Flotation (10) rückgeführten Sekundär-Flotationsstoffmenge derart vorgenommen wird, daß der im Kreislauf in der Primär-Flotation (11) geführte Anteil der in der Sekundär-Flotation gereinigten Stoffmenge verändert wird, so daß nur ein entsprechend geringerer Anteil bei zu großer Schaummenge vor die Primär-Flotation (10) zurückgeführt wird.

3. Verfahren nach Anspruch 1 oder 2, dadurch gekennzeichnet, daß Chemikalien, die die Schaumerzeugung begünstigen oder den Schaum stabilisieren oder Flotationswässer, die solche Chemikalien enthalten oder Altpapierstoffströme bei zu hoher Schaummenge in ihrer Menge herabgesetzt werden.

4. Verfahren nach Anspruch 3, dadurch gekennzeichnet, daß die zur Verdünnung der zu flotierenden Suspension eingesetzte Rückwassermenge aus der papierfabrikation anteilig durch andere Wassermengen, vorzugsweise Frischwasser, ersetzt wird, falls das Rückwasser mit das Schäumen begünstigenden oder den Schaum stabilisierenden Substanzen angereichert ist.

5. Verfahren nach einem der Ansprüche 1 bis 4, dadurch gekennzeichnet, daß zwei Altpapiersorten mit unterschiedlichem Gehalt an auf die Schaumentstehung oder -stabilisierung einwirkenden Chemikalien oder Substanzen getrennt geregelt dem Stofflöser zugeführt werden.

6. Verfahren nach einem der Ansprüche 1 bis 5, dadurch gekennzeichnet, daß der relative Luftgehalt über den Kompressionsgrad einer Schlammprobe ermittelt wird.

## Claims

1. A method of controlling a flotation cell or flotation plant for suspensions to be cleansed, relating to the production of foam, **characterised in that,** in dependence of the detection of a relative air content of the foam or the deposited foam (slurry), which partly affects the volume of produced foam, by means of a respective probe, a control or regulation of other material and process parameters which substantially affect the volume of foam is carried out in front of or behind the flotation plant, or, if appropriate, a primary flotation plant (flotation machine of primary flotation cells).

2. A method according to claim 1, **characterised in that** a control of the volume of secondary flotation material which is fed back to the primary flotation (10̸) is carried out in such a manner that the proportion of volume of material which has been cleansed in the secondary flotation and which is ducted in the circulation of the primary flotation (11) is altered, so that in the event of an excessive volume of foam only a respectively reduced proportion is fed back to in front of the primary flotation (10̸).

3. A method according to claim 1 or 2, **characterised in that,** in the event of an excessive volume of foam, either the quantity of those chemicals which aid the production of foam or stabilize the foam, or of those flotation waters containing such chemicals or waste-paper flows, are reduced.

4. A method according to claim 3, **characterised in that** the volume of feedback water from paper fabrication, which is used to dilute the floating suspension, is proportionally replaced by other volumes of water, preferably fresh water, if the feedback water is enriched with substances which promote foaming or stabilize the foam.

5. A method according to any of claims 1 to 4, **characterised in that** two types of waste paper with different content of chemicals or substances which affect foaming or foam stabilization are fed to the solvent of the material whilst being separately controlled.

6. A method according to any of claims 1 to 5, **characterised in that** the relative air content is determined via the degree of compression of a slurry sample.

## Revendications

1. Procédé permettant la régulation, en ce qui concerne la production de mousse, d'une cellule de flottation ou d'une installation de flottation pour suspensions à épurer, caractérisé en ce qu'en fonction de la détermination d'une teneur relative en air de la mousse produite ou de la mousse précipitée (boues) au moyen d'une sonde appropriée, cette teneur relative en air déterminant en même temps le débit de mousse qui est produit, on exécute une commande ou une régulation des autres paramètres qui concernent les matières ou le processus en amont ou en aval de l'installation de flottation, éventuellement de l'installation de flottation primaire (appareil de flottation formé de cellules de flottation primaire), et qui déterminent essentiellement le débit de mousse.

2. Procédé suivant la revendication 1, caractérisé en ce qu'on exécute une commande du débit de matière de flottation secondaire recyclé vers la flottation primaire (10), de façon telle que la proportion du débit de matière épurée dans la flottation secondaire qui est envoyée dans le circuit de la flottation primaire (11) est modifiée, de sorte que seule une très faible proportion correspondante est renvoyée en amont de la flottation primaire (10) dans le cas d'un débit de mousse trop important.

3. Procédé suivant l'une des revendications 1 ou 2, caractérisé en ce que, dans le cas d'un débit de mousse trop élevé, on réduit le débit des produits chimiques qui favorisent la production d'une mousse ou stabilisent la mousse, ou des eaux de flottation qui contiennent de tels produits chimiques, ou encore des courants de matière formée de vieux papiers.

4. Procédé suivant la revendication 3, caractérisé en ce que le débit d'eau extraite, provenant de la fabrication de papier, qui est utilisée pour diluer la suspension à mettre en flottation, est remplacée d'une manière proportionnelle par d'autres débits d'eau, de préférence d'eau fraîche, dans le cas où l'eau extraite est enrichie en substances favorisant la formation d'une mousse ou stabilisant la mousse.

5. Procédé suivant l'une des revendications 1 à 4, caractérisé en ce que deux sortes de vieux papiers présentant une teneur différente en substances ou produits chimiques agissant sur la formation d'une mousse ou la stabilisation de la mousse sont envoyées au broyeur en faisant l'objet d'une régulation séparée.

6. Procédé suivant l'une des revendications 1 à 5, caractérisé en ce que la teneur relative en air est déterminée au moyen du degré de compression d'un échantillon de boues.
